## Europäisches Patentamt

## European Patent Office

## Office européen des brevets

(19)

(11) Veröffentlichungsnummer : **0 283 523 B1**

(12) **EUROPÄISCHE PATENTSCHRIFT**

(45) Veröffentlichungstag der Patentschrift :
29.01.92 Patentblatt 92/05

(51) Int. Cl.⁵ : **B23H 1/02**

(21) Anmeldenummer : **87906802.1**

(22) Anmeldetag : **17.09.87**

(86) Internationale Anmeldenummer :
**PCT/SU87/00100**

(87) Internationale Veröffentlichungsnummer :
**WO 88/02293 07.04.88 Gazette 88/08**

(54) **VORRICHTUNG ZUM STEUERN DES VORSCHUBS DER WERKZEUGELEKTRODE IN ELEKTROEROSIONSWERKZEUGMASCHINEN.**

(30) Priorität : **25.09.86 SU 4119672**

(43) Veröffentlichungstag der Anmeldung :
**28.09.88 Patentblatt 88/39**

(45) Bekanntmachung des Hinweises auf die
Patenterteilung :
**29.01.92 Patentblatt 92/05**

(84) Benannte Vertragsstaaten :
**CH DE FR GB IT LI SE**

(56) Entgegenhaltungen :
**GB-A- 1 088 310**
**SU-A- 952 503**
**E.V Armensky, G.V. Falk "Elektricheskie mikromashiny", the third edition, 1985, Visshaya
shkola, Moscow. page 82, fugures 3.39**
**Jy. Kh. Lukes "skhemy na poluprovodnikovykh diodakh", 1972, Energia, Moscow, pages
170-171, figures 6.29-6.34**
**V.G. Gutkin "Avtomatizatsia electroerozionnykh stankov", 1971, Mashinostroenie, Leningrad, see pages 72, 73, figure 26**

(73) Patentinhaber : **INSTITUT ELEKTRONIKI
IMENI U.A. ARIFOVA AKADEMII NAUK
UZBEXKOI SSR
Akademgorodok
Tashkent, 700125 (SU)**

(72) Erfinder : **RASULEV, Vadim Abdulkhaevich
massiv Kara-Su-1, 22-15
Tashkent, 700187 (SU)**
Erfinder : **KHAINOV, Vladimir Ivanovich
ul. Levanevskogo, 41-4
Tashkent, 700070 (SU)**
Erfinder : **ABDUKARIMOV, Erkin Tukhtaevich
Ts-1, 52-6
Tashkent, 700000 (SU)**

(74) Vertreter : **Patentanwälte Zellentin & Partner
Zweibrückenstrasse 15
W-8000 München 2 (DE)**

## Beschreibung

Die vorliegende Erfindung betrifft die funkenerosive Bearbeitung von stromleitenden Materialien, insbesondere Anordnungen zur Regulierung des Vorschubs der Werkzeugelektrode in Funkenerosionsmaschinen.

Charakteristik der bekannten technischen Lösugen

Bei der Regulierung des Vorschubs der Werkzeugelektrode im Laufe der funkenerosiven Bearbeitung stellen die Anpassung der Vorschubgeschwindigkeit der Werkzeugelektrode an die Erosionsgeschwindigkeit im Werkzeugelektrode-Werkstück-Zwischenraum sowie die Qualitätssicherung während der funkenerosiven Bearbeitung (Oberflächengüte, Formhaltigkeit der eingearbeiteten Öffnung usw.) Hauptprobleme dar. Im Laufe der funkenerosiven Bearbeitung treten vielfach zufällige Störungen auf, die durch das Vorhandensein von stromleitenden Teilchen im Entladungsraum sowie durch Schwankungen der Speisenetzspannung bedingt sind. Infolgedessen wird das Aufrechterhalten des vorgegebenen Vorschubbetriebs der Werkzeugelektrode mit Hilfe einer Anordnung zur Regulierung des Vorschubs der Werkzeugelektrode in Funkenerosionsmaschinen erforderlich.

Es ist eine Anordnung zur Regulierung des Vorschubs der Werkzeugelektrode in Funkenerosionsmaschinen (SU, A, Nr. 1202767) bekannt, die einen Impulsgenerator, dessen Eingang an einen der Ausgänge eines Timers angeschlossen ist, und einen Servoantrieb enthält. Die Anordnung enthält ebenfalls eine Reihenschaltung aus einem Widerstandsgeber, einem elektronischen timergesteuerten Schalter, einem Kapazitätsspeicher und einer Vergleichs- und Verstärkerschaltung,deren Ausgang an den Servoantrieb und der Eingang an eine Referenzspannungsquelle angeschlossen sind.

Mit Hilfe dieser Anordnung wird der Widerstand des Entladungsraums während der Pausen zwischen den vom Impulsgenerator eintreffenden Stromimpulsen gemessen.

Durch diese Anordnung ist jedoch keine Möglichkeit gegeben, den Widerstandswert der Werkzeugelektrode selbst zu erfassen. Beim Bohren von tiefen und extrem tiefen Löchern mit geringem Durchmesser wird die Werkzeugelektrode verkürzt, wobei ihr eigener Widerstand sich stark ändert, was wesentliche Fehler mit sich bringt.

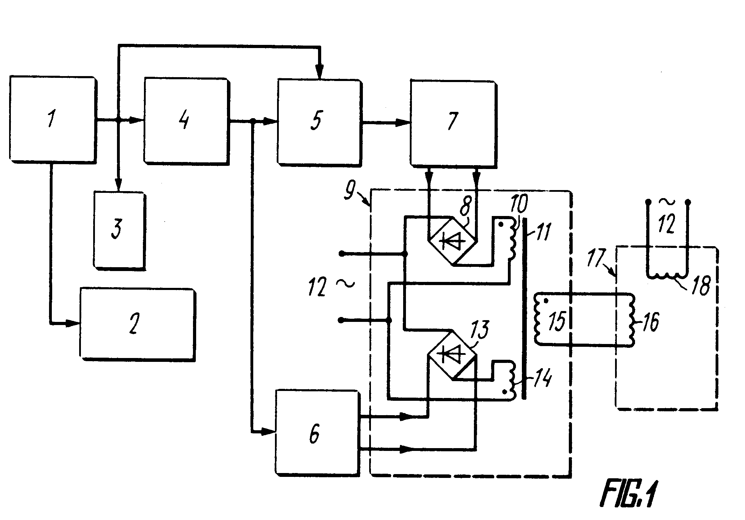

Dieses Problem ist teilweise durch die Schaltung einer Einrichtung gelöst, die im Buch "Elektrische und elektrochemische Methoden der Werkstoffbearbeitung" von B.A. Artamonov u.a., Bd. I, 1983, Vysshaya Shkola, S. 53, Abb. 1.41, beschrieben ist. Diese Anordnung zur Regulierung des Vorschubs der Werkzeugelektrode enthält eine Reihenschaltung aus einem Meßwertaufnehmer, einem Vergleicher und einem Verstärker, dessen Ausgang an einen Stellantrieb zur Verstellung der Werkzeugelektrode angeschlossen ist, während eine Stromversorgungsquelle an den Entladungsraum angeschlossen ist, von dem ein Signal dem Meßwertaufnehmer zugeführt wird.

Als Regelgröße, d.h. als ein Signal, das die Information über die Spaltgröße trägt und im Arbeitsstromkreis der Stromversorgungsquelle äbgegriffen wird, können Momentan- oder Mittelwerte der Spannung den Elektroden im Entladungsraum, der Mittelwert des Stroms im Elektrodenstromkreis, die Verzögerungszeit des Durchschlags u.a.m. dienen. In diesem Fall üben die Parameter der Werkzeugelektrode (Material, elektrischer Widerstand) keinen Einfluß auf die Genauigkeit und Stabilität im Laufe der Bearbeitungszeit aus. Anhand des gemessenen Mittelwertes der Erosionsspannung über dem Entladungsraum kann man über die Größe des Entladungsraums bei vorgegebenen Stromwerten der Stromversorgungsquelle urteilen. Die Information wird kontinuierlich im Laufe der Erosion aufgenommen, gelangt an den Vergleicher und dann über den Verstärker vorzeichenrichtig an einen Stellantrieb, z.B. die Steuerwicklung eines Umkehrmotors.

Diese Anordnung ermöglicht jedoch die Ausführung von tiefen und extrem tiefen Löchern mit geringem Durchmesser bei hoher Bearbeitungsqualität nicht. Bei der Gleichheit des Signals vom Entladungsraum und des Referenzsignals treffen vom Vergleicher keine Befehle am Stellantrieb ein. Der Vorschub der Werkzeugelektrode wird eingestellt. Die Einstellung des Vorschubs der Werkzeugelektrode oder ihr verlangsamter Rückzug mit nachfolgendem Vorschub führen zu einer Vergrößerung der Wirkdauer der Erosionsspannung an einzelnen Stellen des zu bearbeitenden Werkstücks und somit zur Verschlechterung der Oberflächengüte an diesen Stellen (Entstehen einer Balligkeit, Unrundheit) infolge der längeren Einwirkung der seitlichen Erosion. Die Erhöhung der Vorschubgeschwindigkeit führt zu häufigen Unterbrechungen bei der Bewegung der Werkzeugelektrode und somit zu noch stärkerer Verschlechterung der Oberflächengüte des bearbeiteten Werkstücks. Beim Bohren von tiefen Löchern wird das abgetragene Material nicht schnell genug aus der Bearbeitungszone entfernt, bildet eine stromleitende Zone, die die Oberflächengüte stark beeinträchtigt, und setzt die Arbeitsgeschwindigkeit herab.

Darlegung des Wesens der Erfindung

Der vorliegenden Erfindung liegt die Aufgabe zugrunde, den Funktionsablauf der Anordnung zur Regulierung des Vorschubs der Werkzeugelektrode und die elektrische Schaltung des Vorschubantriebs der Elektrode der Anordnung so zu ändern, daß ein Betrieb des stetigen Vorschubs der Werkzeugelektrode und ein Betrieb des Eilrückzugs der Werkzeugelektrode bei einer Verminderung der Spannung über dem Entladungsraum auf einen vorgegebenen Pegel sichergestellt werden.

Die gestellte Aufgabe wird dadurch gelöst, daß die Anordnung zur Regulierung des Vorschubs der Werkzeugelektrode in Funkenerosionsmaschinen, die einen Stromversorgungteil mit Speicherkondensatoren, einen Umschalter, dessen Eingang an den Ausgang des Stromversorgungsteils mit Speicherkondensatoren angeschlossen ist, einen Verstärker, dessen Eingang am Ausgang des Umschalters liegt, und einen steuerbaren Wechselstrom-Umkehrmotor enthält, erfindungsgemäß mit einer Schwellwertschaltung mit einem elektronischen Schalter und einem Umwandlerteil ausgestattet ist, der einen Transformator mit zwei Primärwicklungen, die in Reihe mit dem Wechselstrom-Speisenetz über Diodenbrücken geschaltet sind, von welchen die eine mit dem elektronischen Schalter und die andere über den Verstärker mit dem Umschalter verbunden ist, wobei der elektronische Schalter mit dem Ausgang der Schwellwertschaltung und einem der Eingänge des Umschalters verbunden ist, der andere Eingang des Umschalters mit dem Eingang der Schwellwertschaltung verbunden ist, die mit Speicherkondensatoren des Stromversorgungsteils und der Werkzeuglektrode verbunden ist, während eine der Wicklungen des Elektromotors des Vorschubantriebs der Werkzeugelektrode an die Sekundärwicklung des Transformators des Umwandlerteils und die andere an das Wechselstrom-Speisenetz angeschlossen sind.

Diese schaltungstechnische Lösung der Anordnung zur Regulierung des Vorschubs der Werkzeuglektrode in Funkenerosionsmaschinen ermöglicht den Betrieb des stetigen Vorschubs der Werkzeugelektrode und den Betrieb des Eilrückzugs der Werkzeugelektrode bei einer Verminderung der Spannung über dem Entladungsraum auf einen vorgegebenen Pegel.

Kurzbeschreibung der Zeichnungen

Im folgenden wird die Erfindung an Ausführungsbeispielen anhand von Zeichnungen näher erläutert. Es zeigen:

Fig. 1 ein Prinzipschaltbild der erfindungsgemäßen Anordnung zur Regulierung des Vorschubs der Werkzeugelektrode in Funkenerosionsmaschinen;

Fig. 2 eine der möglichen Ausführungsvarianten der Anordnung.

Ausführungsformen der Erfindung

Die Anordnung zur Regulierung des Vorschubs der Werkzeugelektrode enthält erfindungsgemäß einen Stromversorgungteil 1 (Fig. 1) mit Speicherkondensatoren, dessen einer Ausgang an das zu bearbeitende Werkstück 2 und dessen anderer Ausgang an eine Werkzeugelektrode 3, eine Schwellenwertschaltung 4 und einen der Eingänge eines Umschalters 5 angeschlossen sind. Der Ausgang der Schwellenwertschaltung 4 ist an einen elektronischen Schalter 6 und den zweiten Eingang des Umschalters 5 angeschlossen, dessen Ausgang mit dem Verstärker 7 verbunden ist. Der Ausgang des Verstärkers 7 ist an eine Diodenbrücke 8 des Umwandlerteils 9 angeschlossen, der in Reihe mit der Primärwicklung 10 eines Transformators 11 des Umwandlerteils 9 und dem Wechselstrom-Speisenetz 12 geschaltet ist. Der Ausgang des elektronischen Schalters 6 ist mit einer weiteren Diodenbrücke 13 des Umwandlerteils 9 und einer zweiten Primärwicklung 14 des Transformators 11 des Unwandlerteils 9 verbunden. Die Sekundärwicklung 15 des Transformators 11 ist an die eine Wicklung 16 des steuerbaren Wechselstrom-Umkehrmotors 17 angeschlossen, während die andere Wicklung 18 mit dem Wechselstrom-Speisenetz 12 verbunden ist.

Die Anordnung funktioniert folgenderweise.

Der Werkzeugelektrode 3 und dem zu bearbeitenden Werkstück 2 wird vom Stromversorgungsteil 1 mit Speicherkondensatoren eine Spannung zugeführt. Die Arbeitsspannung zwischen Werkzeugelektrode 3 und Werkstück 2 ist vom Stromwert der Funkenerosion und der Größe des Entladungsraums abhängig. Diese Spannung trifft am Eingang der Schwellenwertschaltung 4 und des Umschalters 5 ein. Ist diese Spannung kleiner als die Größe der eingestellten Ansprechschwelle der Schwellenwertschaltung 4, so sperrt das Signal von der Schwellenwertschaltung 4 den Umschalter 5, wodurch die Zuführung der Spannung vom Entladungsraum über den anderen Eingang des Umschalters 5 zum Verstärker 7 verhindert wird, was seinerseits zum Stromloswerden der Wicklung 10 des Transformators 11 des Umwandlerteils 9 führt, die im Strompfad der Diodenbrücke 8 und des Wechselstromspeisenetzes 12 liegt. Gleichzeitig öffnet das Ausgangssignal der Schwellwertschaltung 4 die Diodenbrücke 13 des Umwandlerteils 9, die im Strompfad der Wicklung 14 des Transformators 11 des Teils 9 und des Wechselstrom-Speisenetzes 12 liegt. Von der Sekundärwicklung 15

3

des Transformators 11 des Teils 9 wird die Spannung einer der Wicklungen 16 des steuerbaren Wechselstrom-Umkehrmotors 17 zugeführt, was zum schnellen Rückzug der Werkzeugelektrode 3 vom Werkstück 2 führt. Die andere Wicklung 18 des Motors 17 ist mit dem Wechselstrom-Speisenetz 12 verbunden.

Ist die Arbeitsspannung des Entladungsraums größer als die eingestellte Ansprechschwelle der Schwellenwertschaltung 4, so sperrt das Signal von der Schwellenwertschaltung 4 den elektronischen Schalter 6, der seinerseits die Diodenbrücke 13 des Teils 9 sperrt, wodurch auch die entsprechende Primärwicklung 14 des Transformators 11 des Teils 9 stromlos wird. Gleichzeitig wird der Umschalter 5 aufgesteuert, der die Zuführung der Spannung vom Entladungsraum über den anderen Eingang des Umschalters 5 zum Verstärker 7 ermöglicht, durch den die mit ihm verbundene Diodenbrücke 8 des Teils 9 entsperrt wird, welche die Primärwicklung 10 des Transformators 11 mit Strom versorgt. Die Spannung an dieser Wicklung 10 und somit auch an der Sekundärwicklung 15 des Transformators 11 ist proportional zum Ausgangssignal des Verstärkers 7, welches durch die Arbeitsspannung über dem Entladungsraum bestimmt wird. Infolgedessen wird die Werkzeugelektrode 3 in fortschreitende Bewegung - Vorschub - zum Werkstuck 2 hin versetzt.

Die Primärwicklungen 10, 14 des Transformators 11 des Teils 9 sind gegenphasig geschaltet, was die Änderung der Phase der von der Sekundärwicklung 15 des Transformators abgegriffenen Spannung je nach der Größe der Arbeitsspannung über dem Entladungsraum ermöglicht und dadurch den Betrieb des Vorschubs oder des Eilrückzugs der Werkzeugelekrode 3 ermöglicht.

Es sei eine der möglichen Ausführungsformen der Anordnung zur Regulierung des Vorschubs der Werkzeugelektrode näher beschrieben.

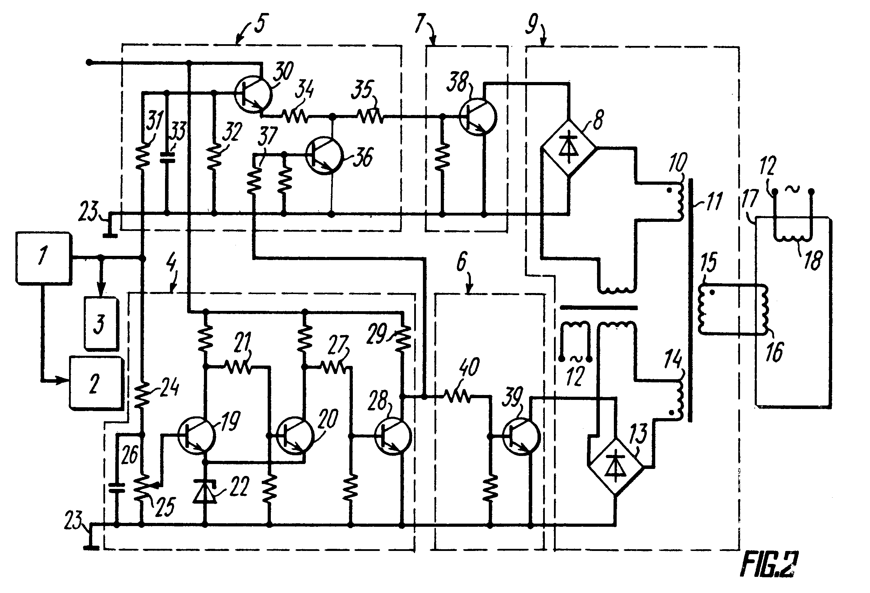

Die Schwellenwertschaltung 4 (Fig. 2) ist nach der bekannten Schmitt-Triggerschaltung aufgebaut und enthält zwei Transistoren 19 und 20, wobei der Kollektor des Transistors 19 über einen Widerstand 21 mit der Basis des Transistors 20 verbunden ist und die Emitter der Transistoren 19 und 20 untereinander verbunden und an eine Referenzdiode 22 angeschlossen sind, die ihrerseits an die gemeinsame Stromversorgungsleitung 23 angeschlossen ist. Am Eingang der Schwellenwertschaltung 4 ist ein Spannungsteiler angeordnet, der aus zwei Widerständen 24 und 25 besteht, wobei der mit einem Kondensator 26 überbrückte Widerstand 25 regelbar ist. Der Schleifer des Widerstandes 25 ist mit der Basis des Transistors 19 verbunden und dient zur Regulierung der Ansprechschwelle der Schwellwertschaltung 4. Der Kollektor des Transistors 20 ist über einen Widerstand 27 an die Basis eines weiteren Transistors 28 angeschlossen, dessen Emitter an der Stromversorgungsleitung 23 liegt, während der Kollektor mit einem Widerstand 29 verbunden ist. Der Ausgang der Schwellenwertschaltung 4 ist an den elektronischen Shalter 6 und an den Umschalter 5 angeschlossen.

Der Umschalter 5 enthält einen Transistor 30, dessen Basis über einen Widerstand 31 an den Entladungsraum und über einen mit einem Kondensator 33 überbrückten Widerstand 32 an die gemeinsame Stromversorgungsleitung 23 angeschlossen ist. Der Emitter eines Transistors 30 ist über einen Widerstand 34 mit einem Widerstand 35 und dem Kollektor des Transistors 36 verbunden. Der Emitter des Transistors 36 ist an die gemeinsame Stromversorgungsleitung 23 angeschlossen. Die Basis des Transistors 36 ist über einen Widerstand 37 mit dem Ausgang der Schwellenwertschaltung 4 (Kollektor des Transistors 28) verbunden. Der Widerstand 35 ist mit dem Eingang des Verstärkers 7 verbunden.

Der Verstärker 7 enthält einen Transistor 38. Der Emitter des Transistors 38 ist an die gemeinsame Stromversorgungsleitung 23 angeschlossen, der Kollektor steht mit der positiven Ausführung der Diodenbrücke 8 in Verbindung. Die negative Ausführung der Diodenbrücke 8 ist mit der gemeinsamen Stromversorgungsleitung 23 verbunden.

Der elektronische Schalter 6 enthält einen Transistor 39 und einen Widerstand 40, der die Basis des Transistors 39 und den Ausgang der Schwellenwertschaltung 4 (Kollektor des Transistors 28) verbindet. Der Emitter des Transistors 39 ist mit der gemeinsamen Stromversorgungsleitung 23 verbunden, der Kollektor ist an die positive Ausführung der Diodenbrücke 13 angeschlossen. Die negative Ausführung der Diodenbrücke 13 ist an die gemeinsame Stromversorgungsleitung 23 angeschlossen. Beim Elektromotor 17 - Vorschubantrieb der Werkzeugelektrode 3 - ist die Steuerwicklung 16 mit der Sekundärwicklung 15 des Transformators 11 des Teils 9 und die Wicklung 18 (Erregung) mit dem Wechselstrom-Speisenetz 12 verbunden.

Während der Arbeit wird die Spannung des Stromversorgungsteils 1 der Werkzeugelektrode 3 und gleichzeitig über den Widerstand 31 dem Umschalter 5 und über die Widerstände 24 und 25 der Schwellenwertschaltung 4 zugeführt. In der Schwellenwertschaltung 4 wird die Spannung nach der am Kondensator 26 erfolgten Integration der Spannungsimpulse von der Regelausführung des zur Einstellung der Ansprechschwelle der Schwellwertschaltung dienenden Stellwiderstandes 25 dem aus Transistoren 19, 20 aufgebauten Schmitt-Trigger zugeführt. Als Referenzbauelement ist die Referenzdiode 22 geschaltet. Vom Ausgang des Schmitt-Triggers (Kollektor des Transistors 20) wird die Spannung über den Begrenzungswiderstand 27 der Verstärkerstufe mit dem Transistor 28 zugeführt, die mit dem Widerstand 29 belastet ist. Je nach der Größe der Eingangsspannung kann der Transistor 28 leitend oder gesperrt sein. Ist das am Eingang der Schwellwertschaltung 4 eintreffende Signal größer als der eingestellte Pegel, der mit der Regelausführung des Widerstandes 25 der Ansprechschwelle der Schwellwertschaltung vorgegeben wird, so ist der Transistor 19 leitend, der Transistor 20 gesperrt, der Transistor 28 befindet sich im leitenden Zustand und seine Kollektorspannung wird über den Widerstand 37 dem Transistor 36 des Umschalters 5 zugeführt. Der Transistor 36 ist gesperrt, deshalb wird das vom Entladungsraum und der Integrierkette 31, 33, 32 des Umschalters 5 eintreffende Signal dem als ein Emitterfolger arbeitenden Transistor 30 und über Widerstände 34, 35 dem Transistor 38 des Verstärkers 7 zugeführt. Der Transistor 38 arbeitet im Betrieb der linearen Verstärkung und steuert die Diodenbrücke 8 des Teils 9, die ihrerseits die Primärwicklung 10 des Transformators 11 des Teils 9 mit Strom versorgt. In diesem Fall gewährleistet der Elektromotor 17 den Vorschub der Werkzeugelektrode 3 des Werkztücks 2, wodurch ein Entladungsraum mit einer den Betrieb der funkenerosiven Bearbeitung sicherstellenden Spaltgröße erzeugt wird.

Gleichzeitig gelangt die Kollektorspannung des Transistors 28 über den Widerstand 40 an die Basis des Transistors 39 des elektronischen Schalters 6. Der Transistor 39 wird gesperrt, wodurch die Diodenbrücke 13 des Teils 9 gesperrt und damit die Wicklung 14 des Transformators 11 des Teils 9 stromlos wird.

Ist das vom Entladungsraum an der Schwellenwertschaltung 4 eintreffende Signal kleiner als die eingestellte Ansprechschwelle der Schwellenwertschaltung 4, die mit der Regelausführung des Widerstandes 25 festgelegt wird, ist der Transistor 19 gesperrt, der Transistor 20 leitend, der Transistor 28 befindet sich im gesperrten Zustand und seine Kollektorspannung wird über den Widerstand 37 dem Transistor 36 des Umschalters 5 zugeführt. Der Transistor 36 ist leitend, deshalb kann das vom Entladungsraum und von der Integrierkette 31, 33, 32 des Umschalters 5 am Transistor 30 eintreffende Signal nicht an den Eingang des Verstärkers 7 gelangen, da der Transistor 36 den Ausgangsstromkreis (Widerstände 34, 35) des Transistors 30 kurzschließt. Das führt zur Sperrung der Diodenbrücke 8 und zum Stromloswerden der Wicklung 10 des Transformators 11. Der Vorschub der Werkzeugelektrode 3 wird unterbrochen.

Gleichzeitig gelangt die Kollektorspannung des Transistors 28 über den Widerstand 40 an den Transistor 39 des elektronischen Schalters 6. Der Transistor 39 wird leitend und entsperrt die Diodenbrücke 13 des Teils 9, die die Wicklung 14 des Transformators 11 mit Stom versorgt, welche gegenphasig in bezug auf die Wicklung 10 desselben Transformators 11 geschaltet ist. An der Sekundärwicklung 15 des Transformators 11 des Teils 9 tritt eine Spannung auf, die den Elektromotor in einen Betriebszustand überführt, der den Eilrückzug der Werkzeugelektrode 3 sicherstellt. Dieser Betriebszustand bleibt so lange erhalten, bis die am Eingang der Schwellenwertschaltung 4 eintreffende Spannung den Spannungswert der Ansprechschwelle der Schwellenwertschaltung 4 übersteigt. Das Erhöhen des Spannungswertes an Eingang der Schwellwertschaltung 4 über den Pegel der Ansprechschwelle der Schwellenwertschaltung 4 hinaus über führt die Anordnung in die oben beschriebene Betriebsart des Vorschubs der Werkzeugelektrode 3.

Somit ermöglicht die Anordnung zur Regulierung des Vorschubs der Werkzeugelektrode die Erzielung eines stetigen Vorschubs der Elektrode zum zu bearbeitenden Werkstück hin durch Einführung einer Schwellwertschaltung, eines Umschalters, eines elektronischen Schalters, eines Verstärkers und eines Umwandlers sowie die Überführung der Anordnung in den Betrieb des Eilrückzugs der Werkzeugelektrode im Falle einer Erhöhung der elektrischen Leitfähigkeit in der Bearbeitungszone, die zu einer Beeinträchtigung des Funkenerosionsprozesses führt, wodurch der Zutritt der Betriebsflüssigkeit zur Bearbeitungszone erleichtert wird, die Entfernung des abgetragenen Materials aus der Bearbeitungszone und die Wiederherstellung des normalen Verlaufs des Funkenerosionsprozesses wesentlich verbessert werden, was die Stabilität des Betriebs besonders beim Herstellen von tiefen und extrem tiefen Bohrungen mit kleinem Durchmesser unter Beibehaltung von Qualitätskennwerten (Oberflächengüte, Geometrie) der funkenerosiven Bearbeitung bedingt.

Industrielle Anwendbarkeit

Die Erfindung kann eine breite Anwendung im Werkzeugmaschinenbau und für die Metallbearbeitung bei der Entwicklung von CNC-Werkzeugmaschinen zum Lochen von tiefen und extrem tiefen Öffnungen in elektrisch leitenden Materialien bei unterschiedlichen Konfigurationen und Abmessungen finden.

**Patentansprüche**

1. Anordnung zur Regulierung des Vorschubs der Werkzeugelektrode in Funkenerosionsmaschinen, die einen Stromversorgungsteil (1) mit Speicherkondensatoren, bei dem der eine Ausgang an das Werkstück (2) und der andere Ausgang an die Werkzeugelektrode (3) angeschlossen sind, einen Umschalter (5), dessen Eingang an den Ausgang des Stromversorgungsteils (1) angeschlossen ist, eine Schwellenwertschaltung (4), eine elektronische Umschaltung und einen steuerbaren Wechselstrom-Umkehrmotor (17) enthält, dadurch gekennzeichnet, daß die Schwellenwertschaltung (4) eine Schalthysterese aufweist, mit einem elektronischen Schalter (6) und einem Umwandlerteil (9) ausgestattet ist, der einen Transformator (11) mit zwei Primärwicklungen (10, 14), die in Reihe mit dem Wechselstrom-Speisenetz (12) über Diodenbrücken (8, 13) geschaltet sind, von welchen die eine mit dem elektronischen Schalter (6) und die andere über einen Verstärker (7), dessen Eingang am Ausgang des Umschalters (5) liegt, mit dem Umschalter (5) verbunden ist, wobei der elektronische Schalter (6) an den Ausgang der Schwellenwertschaltung (4) und einen der Eingänge des Umschalters (5) angeschlossen ist und der andere Eingang des Umschalters (5) mit dem Eingang der Schwellenwertschaltung (4) in Verbindung steht, die mit den Speicherkondensatoren des Stromversorgungsteils (1) und der Werkzeugelektrode (3) verbunden ist, während eine der Wicklungen (16) des steuerbaren Wechselstrom-Umkehrmotors (17) an die Sekundärwicklung (15) des Transformators (11) des Umwandlerteils (9) und die andere an das Wechselstrom-Speisenetz (12) angeschlossen sind.

## Claims

1. A device for electrode-tool feed control in electro-erosion machines, comprising a power source (1) equipped with reservoir capacitors and having one output thereof connected to a workpiece (2) and the other to the electrode-tool (3), a switching device (5) having its input connected to the output of the power source (1), a threshold circuit (4), an electronic switching device and a controlled reversible AC motor (17), **characterized in that** the threshold circuit (4) has a switching hysteresis, an electronic switch (6) and a converter unit (9) including a transformer (11) featuring two primary windings (10, 14) connected in series with an AC supply line (12) via diode bridges (8, 13), one of said diode bridges being connected to the electronic switch (6) and the other, via an amplifier (7), whose input is connected to the output of the switching device (5), to the switching device (5), while the electronic switch (6) is connected to the output of the threshold circuit (4) and one of the inputs of the switching device (5) whose other input is connected to the input of the threshold circuit (4) coupled to the reservoir capacitors of the power source (1) and the electrode-tool (3), and one of the windings (16) of the reversible AC motor (17) is connected to a secondary winding (15) of the transformer (11) of the converter unit (9) and the other winding thereof is connected to the AC supply line (12).

## Revendications

1. Dispositif pour la régulation de l'avance d'une électrode-outil dans des machines-outils à électro-érosion, comprenant une source d'alimentation (1) à condensateurs-réservoirs, l'une des sorties de laquelle est connectée à la pièce à usiner (2) et l'autre, à l'électrode-outil (3), un commutateur (5), une entrée duquel est raccordée à la sortie de la source d'alimentation (1) à condensateurs-réservoirs, un circuit à seuil (4), une commutation électronique et un moteur électrique réversible (17) à courant alternatif, **caractérisé** en ce que le circuit à seuil (4) présente une hystérésis de commutation, un commutateur électronique (6) et un bloc convertisseur (9) comprenant un transformateur (11) à deux primaires (10, 14) connectés en série au secteur d'alimentation (12) à courant alternatif par l'intermédiaire de ponts à diodes (8, 13), l'un desquels est connecté au commutateur électronique (6) et l'autre, via un amplificateur (7), l'entrée duquel étant raccordée à la sortie du commutateur (5), au commutateur (5), le commutateur électronique (6) étant raccordé à la sortie du circuit à seuil (4) et à l'une des entrées du commutateur (5) tandis qu'une autre entrée du commutateur (5) est raccordée à l'entrée du circuit à seuil (4) qui est relié aux condensateurs-réservoirs de la source d'alimentation (1) et à l'électrode-outil (3), l'un des enroulements (16) du moteur électrique réversible (17) à courant alternatif étant raccordée au secondaire (15) du transformateur (11) du bloc convertisseur (9) et l'autre enroulement dudit moteur étant branché au secteur d'alimentation (12) à courant alternatif.

FIG.1

FIG.2